# EUROPÄISCHE PATENTSCHRIFT

(11) **EP 2 382 066 B1**
(45) Veröffentlichungstag und Bekanntmachung des Hinweises auf die Patenterteilung: **11.03.2015**
(21) Anmeldenummer: 10701469.8
(22) Anmeldetag: 21.01.2010
(51) Int. Cl.: B23B 5/16, B23K 11/30

(54) **VORRICHTUNG ZUM NACHBERARBEITEN VON PUNKTSCHWEISSELEKTRODEN**
DEVICE FOR FINISHING SPOT WELDING ELECTRODES
DISPOSITIF POUR LA FINITION D'ÉLECTRODES DE SOUDAGE PAR POINTS

(30) Priorität: 29.01.2009 DE 102009006585
(43) Veröffentlichungstag der Anmeldung: 02.11.2011
(73) Patentinhaber: Lutz Precision, K.S., 821 09 Bratislava (SK)
(72) Erfinder: FAHNENSTICH, Stefan, 82194 Gröbenzell (DE)
(74) Vertreter: Grünecker, Kinkeldey, Stockmair & Schwanhäusser
(86) Internationale Anmeldenummer: PCT/EP2010/000351
(87) Internationale Veröffentlichungsnummer: WO 2010/086117

(56) Entgegenhaltungen:
- EP-A2- 1 629 911
- DE-A1- 4 213 571
- DE-A1- 19 725 256
- DE-U- 7 421 277
- US-A- 3 283 662

## Beschreibung

Die Erfindung betrifft eine Vorrichtung und einen Handfräser zum Nachbearbeiten von Punktschweißelektroden.

Um Blechteile fest miteinander zu verbinden, werden in handwerklichen Betrieben beziehungsweise in Industrieanlagen, wie beispielsweise Automobilherstellungsanlagen, häufig Schweißroboter mit Schweißzangen eingesetzt. Bei einem Schweißvorgang drückt die Schweißzange von zwei gegenüberliegenden Seiten jeweils zwei oder mehrere Blechteile aufeinander, wobei durch in den Zangenarmen der Schweißzange angebrachten Punktschweißelektroden ein elektrischer Strom fließt, so dass die Blechteile punktgenau miteinander verschweißt werden. Die Schließkraft einer Punktschweißzange während des Schweißvorgangs kann bis zu 3 bis 8 kN betragen. Nach ungefähr 100 bis 300 Schweißvorgängen sind die Punktschweißelektroden derart abgenutzt beziehungsweise mit Schweißresten belegt, dass ein zuverlässiges Verschweißen nicht mehr unbedingt möglich ist.

Um die abgenützten Punktschweißelektrodenspitzen wieder in ihre ursprüngliche Form zu bringen, werden besagte Spitzen mit Hilfe eines Elektrodenfräsers (beziehungsweise Kappenfräsers) nachbearbeitet. Für die Instandsetzung der abgenützten Punktschweißelektroden, die aus relativ weichem Kupfer bestehen, reicht es zumeist aus, weniger als 0.1 mm Material von den Punktschweißelektrodenspitzen abzutragen.

Die Schweißelektroden weisen in der Regel austauschbare Kappen auf. Sie können jedoch auch einstückig ohne solche Kappen sein. Die folgenden Ausführungen betreffen beide Fälle gleichermaßen, da das Nachbearbeiten von Punktschweißelektroden genauso für einstückige Elektroden wie für Elektroden mit Kappen durchgeführt werden kann.

Das Nachbearbeiten einer Punktschweißelektrodenspitze kann mehrmals (nach jeweils zirka 100 bis 300 Schweißvorgängen) durchgeführt werden. Um Fräsergebnisse erzielen zu können, die eine gleichbleibend hohe Qualität aufweisen, ist es von Vorteil, wenn bei jedem Fräsvorgang der Fräskopf des Fräsers relativ zur Punktschweißelektrodenspitze möglichst exakt positioniert ist. Optimale Fräsergebnisse werden dann erzielt, wenn die Rotationsachse des Fräsers mit der Symmetrieachse der Punktschweißelektrode in etwa übereinstimmt.

In der Praxis ist eine solche Übereinstimmung jedoch nur schwer erreichbar, insbesondere wenn es sich bei dem Fräser um einen Handfräser handelt, der manuell zur Punktschweißelektrodenspitze geführt wird. Bei dem Fräsvorgang kann es vorkommen, dass der Fräser seitlich von der Punktschweißelektrodenspitze abrutscht beziehungsweise verrutscht oder, dass der Fräskopf leicht schräg auf die Punktschweißelektrodenspitze aufgesetzt wird, was bedeutet, dass in beiden Fällen die Rotationsachse des Fräskopfes und die Symmetrieachse der Punktschweißelektrode nur unzureichend übereinstimmen.

EP 1 629 911 A2 offenbart eine Vorrichtung mit den Merkmalen des Oberbegriffs von Anspruch 1.

Daher liegt der nachfolgend beschriebenen Erfindung die Aufgabe zugrunde, eine Vorrichtung und einen Handfräser zur Verfügung zu stellen, mit denen Punktschweißelektroden so nachbearbeitet werden können, dass Ergebnisse mit gleichbleibend hoher Qualität erzielt werden.

Diese Aufgabe wird gelöst mit einer Vorrichtung zum Nachbearbeiten von Punktschweißelektroden nach Anspruch 1 und mit einem Handfräser zum Nachbearbeiten von Punktschweißelektroden nach Anspruch 12.

Bevorzugte Ausführungsformen sind in den abhängigen Ansprüchen offenbart.

Die Vorrichtung zum Nachbearbeiten von Punktschweißelektroden umfasst einen Fräskopf, der geeignet ist, Punktschweißelektroden nachzubearbeiten. Beispielsweise wird durch den Fräskopf verbrauchtes Punktschweißelektrodenmaterial derart abgetragen, dass die Punktschweißelektrodenspitze ihre ursprüngliche Form wieder erhält. Weiter umfasst die Vorrichtung zum Nachbearbeiten von Punktschweißelektroden eine Führungsvorrichtung, die geeignet ist, den Fräskopf relativ zu wenigstens einer Punktschweißelektrode zu führen. Befinden sich Teile der Punktschweißelektrode in einem Punktschweißelektrodenschaft, so kann die Führungsvorrichtung auch zum Führen des Fräskopfes relativ zu wenigstens einem Punktschweißelektrodenschaft verwendet werden.

Die Führungsvorrichtung weist Abstandhalter auf, in Form von Wülsten und/oder Rippen und/oder Noppen. Auf diese Weise ist eine Führung der Punktschweißelektroden beziehungsweise Punktschweißelektrodenschäfte möglich, sodass zwischen Führungsvorrichtung und Punktschweißelektrode beziehungsweise Punktschweißelektrodenschaft, Hohlräume verbleiben, in welchen sich zum Beispiel abgetragenes Punktschweißelektro denmaterial (zum Beispiel Frässpäne) befinden kann, ohne dass das Einführen der Punktschweißelektrode beziehungsweise des Punktschweißelektrodenschafts beeinträchtigt wird, für den Fall, dass Punktschweißelektrodenmaterial in die Führungsvorrichtung gelangt ist.

Die Führungsvorrichtung hat vorzugsweise die Wirkung, beispielsweise Bewegungen senkrecht zur Längsachse der Punktschweißelektrode beziehungsweise des Punktschweißelektrodenschafts zu verhindern beziehungsweise einzuschränken. Es soll also erreicht werden, dass die Rotationsachse des Fräskopfes und die Symmetrieachse der Punktschweißelektrode während des gesamten Fräsvorgangs möglichst genau übereinstimmen. Idealerweise wird mit Hilfe der Führungsvorrichtung erreicht, dass der Fräskopf relativ zur Punktschweißelektrode nur in einer Richtung bewegt werden kann, nämlich, in Richtung parallel zur Symmetrieachse der Punktschweißelektrode beziehungsweise parallel zur Rotationsachse des Fräskopfes.

Vorzugsweise ist die Führungsvorrichtung mit Hilfe eines Adapterstücks mit dem Fräskopf verbunden. Alternativ ist es jedoch auch möglich, dass die Führungsvorrichtung direkt mit dem Fräskopf verbunden ist. Die Verwendung eines oder mehrerer Adapterstücke ermöglicht, dass verschiedene Führungsvorrichtungen angebracht werden können, sodass Punktschweißelektro-Typischerweise ist die Führungsvorrichtung mit Hilfe eines Adapterstücks mit dem Fräskopf verbunden. Alternativ ist es jedoch auch möglich, dass die Führungsvorrichtung direkt mit dem Fräskopf verbunden ist. Die Verwendung eines oder mehrerer Adapterstücke ermöglicht, dass verschiedene Führungsvorrichtungen angebracht werden können, sodass Punktschweißelektroden beziehungsweise Punktschweißelektrodenschäfte mit unterschiedlichen Durchmessern geführt beziehungsweise bearbeitet werden können.

Die Führungsvorrichtung kann derart mit dem Fräskopf verbunden sein, dass besagte Führungsvorrichtung während des Fräsens um die Punktschweißelektrode beziehungsweise den Punktschweißelektrodenschaft rotiert, oder alternativ kann die Führungsvorrichtung so angebracht sein, dass die Führungsvorrichtung während des Fräsens nicht um die Punktschweißelektrode beziehungsweise den Punktschweißelektrodenschaft rotiert (in diesem Fall ist die Führungsvorrichtung an einem nicht rotierenden Teil des Fräskopfes beziehungsweise des Adapterstücks angebracht, sodass die Führungsvorrichtung typischerweise keine Rotationsbewegungen ausführt). Die Führungsvorrichtung kann mit dem Fräskopf beziehungsweise mit dem Adapterstück durch Schrauben, Kleben oder Stecken beziehungsweise Kombinationen von Schrauben, Kleben und Stecken verbunden werden. Bevorzugt ist eine lösbare Verbindung, die zum Beispiel ein Austauschen der Führungsvorrichtung ermöglicht.

Vorzugsweise befindet sich die Führungsvorrichtung auf der Seite des Fräskopfes, von welcher die Punktschweißelektrode beziehungsweise der Punktschweißelektrodenschaft zum Bearbeiten zugeführt wird. Weiter ist die Führungsvorrichtung vorzugsweise im Wesentlichen ringförmig.

Der Bewegungsfreiraum zwischen Punktschweißelektrode beziehungsweise Punktschweißelektrodenschaft und Führungsvorrichtung beträgt vorzugsweise weniger als 1 mm, bevorzugterweise weniger als 0.5 mm oder 0.1 mm. Der oben genannte Bewegungsfreiraum kann auf der des Fräskopfes abgewandten Seite der Führungsvorrichtung größer sein (beispielsweise bei mehr als 5 mm oder 10 mm liegen), wodurch das Einführen der Punktschweißelektrode beziehungsweise des Punktschweißelektrodenschaftes in die Führungsvorrichtung erleichtert wird.

Im Falle einer ringförmigen Führungsvorrichtung ist bevorzugterweise die Höhe der Führungsvorrichtung mindestens gleich dem halben beziehungsweise ganzen beziehungsweise doppelten inneren Durchmesser der Führungsvorrichtung. Durch die Verwendung einer Führungsvorrichtung mit größerer Höhe kann eine bessere Führung erreicht werden, da die größere Höhe eine geringere Winkelabweichung zwischen Rotationsachse des Fräskopfes und Symmetrieachse der Punktschweißelektrode beziehungsweise des Punktschweißelektrodenschafts zur Folge hat.

In einer bevorzugten Ausführungsform der Erfindung umgibt die Führungsvorrichtung die Punktschweißelektrode beziehungsweise den Punktschweißelektrodenschaft in einem seitlichen Bereich, der mindestens 1 cm, 2 cm, oder 3 cm vom äußersten nachzubearbeitenden Ende der Punktschweißelektrode entfernt ist. Die zu bearbeitende Punktschweißelektrodenspitze wird von der Führungseinrichtung nicht geführt, sondern der dahinterliegende liegende Bereich der Punktschweißelektrode beziehungsweise des Punktschweißelektrodenschafts. In diesem Bereich ist die Punktschweißelektrode beziehungsweise der Punktschweißelektrodenschaft typischerweise gerade (weist entlang der Längsachse der Punktschweißelektrode beziehungsweise des Punktschweißelektrodenschafts also keine Krümmung auf).

Neben den oben genannten Merkmalen weist ein Handfräser zum Nachbearbeiten von Punktschweißelektroden zusätzlich ein Griffstück auf, an dem der Handfräser gehalten werden kann. Um konstant gute Fräsergebnisse erzielen zu können, sind Führungsvorrichtungen insbesondere bei Handfräsern von großem Nutzen. Entsprechende Anwendungen ergeben sich auch für Fälle, in denen beispielsweise eine Schweißzange manuell oder automatisiert an eine fest installierte Fräsvorrichtung für Punktschweißelektroden herangeführt wird beziehungsweise mit dieser bearbeitet wird. Es sind jedoch auch Führungsvorrichtungen an Fräsern denkbar, die maschinell relativ zu einer Punktschweißelektrode beziehungsweise einem Punktschweißelektrodenschaft bewegt werden. Auch in letzterem Fall können Führungsvorrichtungen zu besseren Fräsergebnissen führen.

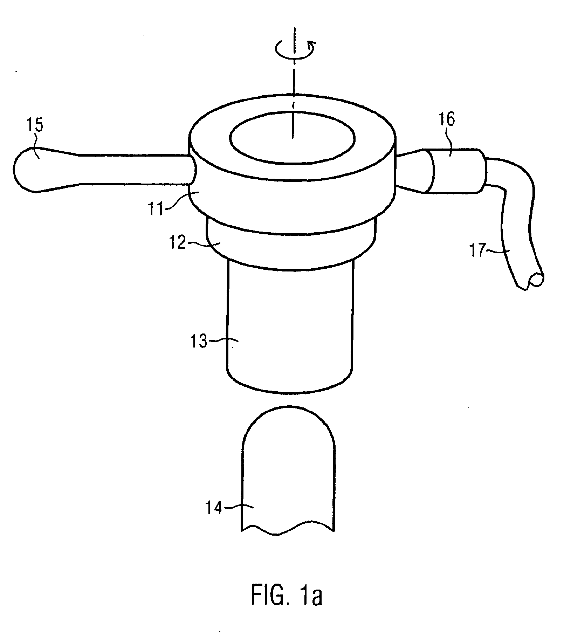

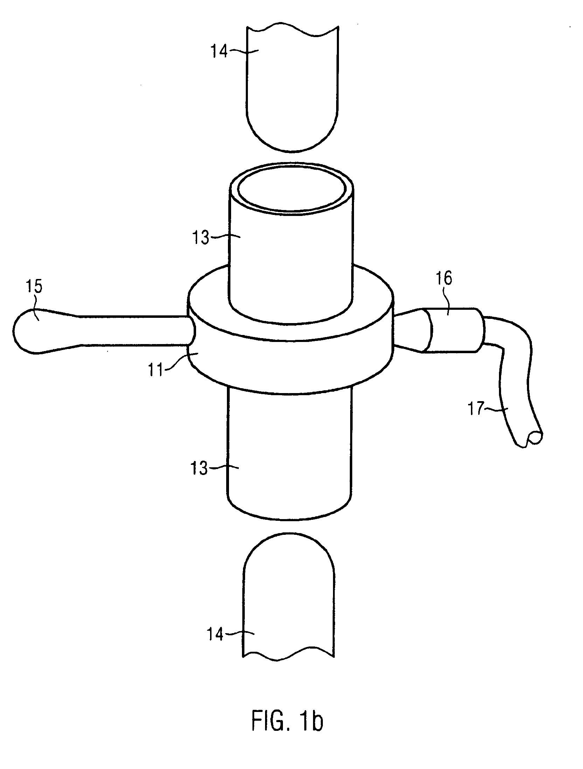

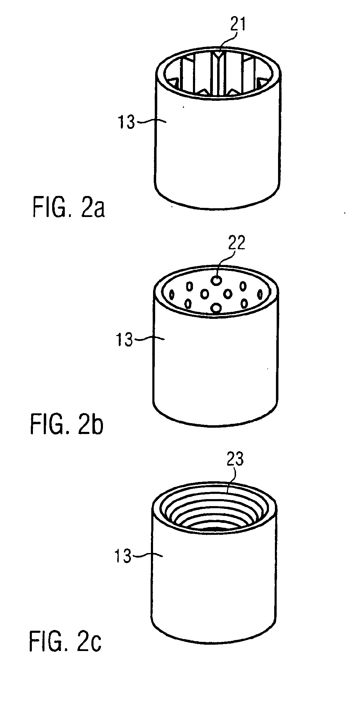

Weitere Aspekte von möglichen Ausführungsformen der Erfindung werden anhand der Figuren 1a, 1b, 2a, 2b und 2c deutlich. Dabei zeigt:
- Figur 1a: Eine schematische Ansicht einer Vorrichtung zum Nachbearbeiten von Punktschweißelektroden;
- Figur 1b: eine schematische Ansicht einer weiteren Vorrichtung zum Nachbearbeiten von Punktschweißelektroden;
- Figur 2a: eine schematische Ansicht einer Führungsvorrichtung mit Abstandhaltern in Form von Rippen;
- Figur 2b: eine schematische Ansicht einer Führungsvorrichtung mit Abstandhaltern in Form von Noppen; und
- Figur 2c: eine schematische Ansicht einer Führungsvorrichtung mit Abstandhaltern in Form von Wülsten.

Eine mögliche Ausführungsform der Erfindung ist in Figur 1 a skizziert. Der Fräskopf 11 umfasst ein Fräswerkzeug (nicht dargestellt), das über ein Getriebe (nicht sichtbar) von einem Antrieb 16 (zum Beispiel einem Pneumatikmotor), welcher mit Energie beziehungsweise Druckluft über die Zuleitung 17 versorgt wird, angetrieben wird. Das Fräswerkzeug ist in einem Gehäuse des Fräskopfes 11 vorgesehen. In diesem Beispiel ist an dem Gehäuse ein Griffstück beziehungsweise Handgriff 15 angebracht, an dem der Fräser gehalten werden kann. Unterhalb des Fräskopfes 11 ist ein Adapterstück 12 zu sehen, an dem eine Führungsvorrichtung 13 angebracht ist. Darunter ist eine Punktschweißelektrode 14 zu sehen. Hierbei kann es sich jedoch auch um einen Punktschweißelektrodenschaft handeln, aus dem die Punktschweißelektrodenspitze herausragt. Werden nun Fräskopf 11 und Punktschweißelektrode 14 auf einander zu bewegt, so bewegt sich die Punktschweißelektrodenspitze durch die Führungsvorrichtung 13 hindurch bis sie auf den Fräskopf 11 trifft. Während des gesamten Fräsvorgangs wird die Punktschweißelektrode 14 relativ zum Fräskopf 11 durch die Führungsvorrichtung 13 in Position gehalten.

Eine alternative Ausführungsform der Erfindung ist in Figur 1b skizziert. Analog zu Figur 1a umfasst die Vorrichtung einen Fräskopf 11, einen Antrieb 16 mit Leitung 17 und ein Griffstück 15. In diesem Fall handelt es sich bei dem Fräskopf 11 jedoch um einen doppelseitigen Fräskopf, mit Hilfe dessen zwei Punktschweißelektroden 14 gleichzeitig bearbeitet werden können. Die beiden Punktschweißelektroden 14 können Bestandteil einer Schweißzange (nicht gezeigt) sein. Da, wie abgebildet, zwei Punktschweißelektroden 14 gleichzeitig bearbeitet werden sollen, umfasst die Vorrichtung auch zwei Führungsvorrichtungen 13, damit beide Punktschweißelektroden während des Schweißvorgangs geführt beziehungsweise in Position gehalten werden können. In der Ausführungsform von Figur 1b werden keine Adapterstücke 12 verwendet. Es sind jedoch entsprechende Ausführungsformen denkbar, bei denen ein oder zwei Adapterstücke 12 zwischen Fräskopf 11 und Führungsvorrichtung 13 angebracht sind.

In den Figuren 2a bis 2c sind jeweils ringförmige Führungsvorrichtungen 13 abgebildet, die Abstandhalter in Form von Rippen 21, Noppen 22 und Wülsten 23 umfassen. Die Abstandhalter haben die Aufgabe, eine Punktschweißelektrode 14 beziehungsweise einen Punktschweißelektrodenschaft zu führen beziehungsweise in Position zu halten. Die Hohlräume zwischen den Abstandhaltern können dazu dienen, abgefrästes Punktschweißelektrodenmaterial aufzunehmen beziehungsweise abzuleiten, wodurch ein Zusetzen des Fräskopfes 11 beziehungsweise der Führungsvorrichtung 13 verhindert werden kann. Weiter sind Führungsvorrichtungen 13 möglich, die eine größere beziehungsweise geringere Höhe im Bezug auf den inneren Durchmesser der jeweiligen Führungsvorrichtung 13 aufweisen. Weiter sind Führungsvorrichtungen 13 denkbar, deren Innendurchmesser sich zum Fräskopf 11 hin verjüngt beziehungsweise der mit größerer Entfernung zum Fräskopf 11 größer wird. Dadurch kann das Einführen der Punktschweißelektrode 14 beziehungsweise des Punktschweißelektrodenschaftes in die Führungsvorrichtung 13 auf der des Fräskopfs 11 abgewandten Seite der Führungsvorrichtung 13 erleichtert werden.

Führungsvorrichtungen 13 sind nicht notwendigerweise ringförmig, sondern können auch andere Formen aufweisen, die geeignet sind, Punktschweißelektroden 14 beziehungsweise Punktschweißelektrodenschäfte zu führen beziehungsweise in Position zu halten. Führungsvorrichtungen weisen jedoch typischerweise einen Hohlraum auf, der eine Punktschweißelektrode beziehungsweise einen Punktschweißelektrodenschaf zumindest teilweise aufnehmen kann. Zum Beispiel kann eine Führungsvorrichtung im inneren Bereich die Form eines Hohlzylinders oder einer entsprechender Form mit variablem Radius aufweisen. Der Hohlraum kann zum Beispiel einen kreisrunden Querschnitt aufweisen. Im Allgemeinen ist der Hohlraum einer Führungsvorrichtung zumindest in einem Teilbereich der Form der zu führenden Punktschweißelektrode beziehungsweise des zu führenden Punktschweißelektrodenschafes angepasst. Es ist also eine Führungsvorrichtung mit eckigem Hohlraum (zum Beispiel mit einer Kaminform) denkbar, falls die zu führenden Punktschweißelektroden beziehungsweise Punktschweißelektrodenschäfte (abgesehen von der typischerweise runden Punktschweißelektrodenspitze) einen eckigen Querschnitt aufweisen.

## Patentansprüche

1. Vorrichtung zum Nachbearbeiten von Punktschweißelektroden (14) umfassend:
einen Fräskopf (11), geeignet zum Nachbearbeiten von Punktschweißelektroden (14);
eine Führungsvorrichtung (13), geeignet zum Führen des Fräskopfes (11) relativ zu wenigstens einer Punktschweißelektrode (14) und/oder zu wenigstens einem Punktschweißelektrodenschaft, **dadurch gekennzeichnet dass** die Führungsvorrichtung (13) Abstandhalter, in Form von Wülsten (23) und/oder Rippen (21) und/oder Noppen (22), zur Führung der Punktschweißelektrode (14) und/oder des Punktschweißelektrodenschafts umfasst.

2. Vorrichtung nach Anspruch 1, wobei die Führungsvorrichtung (13) geeignet ist, Bewegungen senkrecht zur Längsachse der Punktschweißelektrode (14) und/oder des Punktschweißelektrodenschafts zu verhindern oder einzuschränken.

3. Vorrichtung nach Anspruch 1 oder 2, wobei die Führungsvorrichtung (13) direkt oder mittels eines Adapterstücks (12) mit dem Fräskopf (11) verbunden ist.

4. Vorrichtung nach Anspruch 3, wobei das Adapterstück (12) die Verwendung von verschiedenen Führungsvorrichtungen (13) für Punktschweißelektroden (14) und/oder Punktschweißelektrodenschäften mit unterschiedlichen Durchmessern ermöglicht.

5. Vorrichtung nach Anspruch 3 oder 4, wobei die Führungsvorrichtung (13) während des Fräsens um die Punktschweißelektrode (14) und/oder den Punktschweißelektrodenschaft rotiert oder, wobei die Führungsvorrichtung (13) während des Fräsens um die Punktschweißelektrode (14) und/oder den Punktschweißelektrodenschaft nicht rotiert.

6. Vorrichtung nach einem der Ansprüche 3 bis 5, wobei die Führungsvorrichtung (13) durch Schrauben und/oder Kleben und/oder Stecken mit dem Fräskopf (11) oder mit dem Adapterstück (12) verbunden ist.

7. Vorrichtung nach einem der Ansprüche 1 bis 6, wobei sich die Führungsvorrichtung (13) auf der Seite des Fräskopfes (11) befindet, von der die Punktschweißelektrode (14) und/oder der Punktschweißelektrodenschaft zum Bearbeiten zugeführt wird.

8. Vorrichtung nach einem der Ansprüche 1 bis 7, wobei die Führungsvorrichtung (13) im Wesentlichen ringförmig ist.

9. Vorrichtung nach einem der Ansprüche 1 bis 8, wobei die Punktschweißelektrode (14) und/oder der Punktschweißelektrodenschaft in der Führungsvorrichtung (13) maximal 1 mm, bevorzugt maximal 0.1 mm, Spiel hat.

10. Vorrichtung nach einem der Ansprüche 8 bis 9, wobei die Höhe der Führungsvorrichtung (13) mindestens gleich dem halben inneren Durchmesser der Führungsvorrichtung (13) ist, bevorzugt wobei die Höhe der Führungsvorrichtung (13) mindestens gleich dem inneren Durchmesser der Führungsvorrichtung (13) ist, und besonders bevorzugt wobei die Höhe der Führungsvorrichtung (13) mindestens gleich dem doppelten inneren Durchmesser der Führungsvorrichtung (13) ist.

11. Vorrichtung nach einem der Ansprüche 1 bis 10, wobei die Führungsvorrichtung (13) die Punktschweißelektrode (14) und/oder den Punktschweißelektrodenschaft in einem seitlichen Bereich, der mindestens 1 cm, 2 cm, oder 3 cm vom äußersten nachzubearbeitenden Ende der Punktschweißelektrode entfernt ist, umgibt.

12. Handfräser zum Nachbearbeiten von Punktschweißelektroden (14) umfassend:
eine Vorrichtung zum Nachbearbeiten von Punktschweißelektroden (14) nach einem der Ansprüche 1 bis 11; und
ein Griffstück (15).

## Claims

1. A device for dressing spot welding electrodes (14), comprising:
a milling head (11) that is adapted for dressing spot welding electrodes (14);
a guide device (13) that is adapted to guide the milling head (11) relative to at least one spot welding electrode (14) and/or to at least one spot welding electrode shaft,
**characterized in that**
the guide device (13) comprises spacers in the form of bulges (23) and/or ribs (21) and/or knobs (22) for guiding the spot welding electrode (14) and/or the spot welding electrode shaft.

2. The device according to claim 1, wherein the guide device (13) is adapted to prevent or restrict motions perpendicular to a longitudinal axis of the spot welding electrode (14) and/or the spot welding electrode shaft.

3. The device according to claim 1 or 2, wherein the guide device (13) is connected to the milling head (11) either directly or through an adapter piece (12).

4. The device according to claim 3, wherein the adapter piece (12) enables use of diverse guide devices (13) for spot welding electrodes (14) and/or spot welding electrode shafts of different diameters.

5. The device according to claim 3 or 4, wherein the guide device (13) rotates, during milling, around the spot welding electrode (14) and/or the spot welding electrode shaft, or wherein the guide device (13) does not rotate, during milling, around the spot welding electrode (14) and/or the spot welding electrode shaft.

6. The device according to any of claims 3 to 5, wherein the guide device (13) is connected to the milling head (11) or to the adapter piece (12) by screws and/or by bonding and/or by inserting.

7. The device according to any of claims 1 to 6, wherein the guide device (13) is located on a side of the milling head (11) from where the spot welding electrode (14) and/or the spot welding electrode shaft is being fed for machining.

8. The device according to any of claims 1 to 7, wherein the guide device (13) is of a substantially annular shape.

9. The device according to any of claims 1 to 8, wherein the spot welding electrode (14) and/or the spot welding electrode shaft has a maximum clearance of 1 mm, preferably 0.1 mm, in the guide device (13).

10. The device according to any of claims 8 to 9, wherein the height of the guide device (13) is at least equal to half of an inner diameter of the guide device (13), preferably wherein the height of the guide device (13) is at least equal to the inner diameter of the guide device (13), and especially preferred wherein the height of the guide device (13) is at least equal to the double inner diameter of the guide device.

11. The device according to any of claims 1 to 10, wherein the guide device (13) encompasses the spot welding electrode (14) and/or the spot welding electrode shaft in a side area which is at least 1 cm, 2 cm or 3 cm away from an outermost end to be dressed of the spot welding electrode.

12. A hand milling cutter for dressing spot welding electrodes (14), comprising:
the device for dressing spot welding electrodes (14) according to any of claims 1 to 11; and a handle piece (15).

## Revendications

1. Dispositif pour la reprise d'usinage d'électrodes de soudage par points (14), comprenant :
une tête de fraisage (11) adaptée à la reprise d'usinage d'électrodes de soudage par points (14) ;
un dispositif de guidage (13) adapté au guidage de la tête de fraisage (11) par rapport à au moins une électrode de soudage par points (14) et/ou par rapport à au moins un corps d'électrode de soudage par points,
**caractérisé en ce que** le dispositif de guidage (13) comporte des espaceurs sous la forme de bourrelets (23) et/ou de nervures (21) et/ou de plots (22), pour le guidage de l'électrode de soudage par points (14) et/ou du corps d'électrode de soudage par points.

2. Dispositif selon la revendication 1, dans lequel le dispositif de guidage (13) est adapté à empêcher et/ou à limiter des mouvements perpendiculairement à l'axe longitudinal de l'électrode de soudage par points (14) et/ou du corps d'électrode de soudage par points.

3. Dispositif selon la revendication 1 ou la revendication 2, dans lequel le dispositif de guidage (13) est relié directement, ou par l'intermédiaire d'une pièce d'adaptation (12), à la tête de fraisage (11).

4. Dispositif selon la revendication 3, dans lequel la pièce d'adaptation (12) permet l'utilisation de différents dispositifs de guidage (13) pour des électrodes de soudage par points (14) et/ou des corps d'électrodes de soudage par points de diamètres différents.

5. Dispositif selon la revendication 3 ou la revendication 4, dans lequel le dispositif de guidage (13) tourne autour de l'électrode de soudage par points (14) et/ou du corps d'électrode de soudage par points pendant le fraisage, ou dans lequel le dispositif de guidage (13) ne tourne pas autour de l'électrode de soudage par points (14) et/ou du corps d'électrode de soudage par points pendant le fraisage.

6. Dispositif selon l'une des revendications 3 à 5, dans lequel le dispositif de guidage (13) est relié par vissage et/ou collage et/ou emmanchement, à la tête de fraisage (11) ou à la pièce d'adaptation (12).

7. Dispositif selon l'une des revendications 1 à 6, dans lequel le dispositif de guidage (13) se trouve sur le côté de la tête de fraisage (11), à partir duquel l'électrode de soudage par points (14) et/ou le corps d'électrode de soudage par points sont amenés à l'usinage.

8. Dispositif selon l'une des revendications 1 à 7, dans lequel le dispositif de guidage (13) est essentiellement de forme annulaire.

9. Dispositif selon l'une des revendications 1 à 8, dans lequel l'électrode de soudage par points (14) et/ou le corps d'électrode de soudage par points ont un jeu d'au maximum 1 mm, de préférence d'au maximum 0,1 mm, dans le dispositif de guidage (13).

10. Dispositif selon l'une des revendications 8 à 9, dans lequel la hauteur du dispositif de guidage (13) est égale au moins à la moitié du diamètre intérieur du dispositif de guidage (13), dans lequel la hauteur du dispositif de guidage (13) est de préférence au moins égale au diamètre intérieur du dispositif de guidage (13), et dans lequel la hauteur du dispositif de guidage (13) est, de manière particulièrement préférée, au moins égale au double du diamètre intérieur du dispositif de guidage (13).

11. Dispositif selon l'une des revendications 1 à 10, dans lequel le dispositif de guidage (13) entoure l'électrode de soudage par points (14) et/ou le corps d'électrode de soudage par points, dans une zone latérale qui est éloignée d'au moins 1cm, 2cm ou 3cm de l'extrémité la plus extérieure à ré-usiner de l'électrode de soudage par points.

12. Système de fraisage à main pour la reprise d'usinage d'électrodes de soudage par points (14) comprenant :
un dispositif pour la reprise d'usinage d'électrodes de soudage par points (14) selon l'une des revendications 1 à 11 ; et
une pièce formant poignée (15).
